# EUROPEAN PATENT SPECIFICATION

(11) **EP 3 247 967 B1**
(45) Date of publication and mention of the grant of the patent: **02.09.2020**
(21) Application number: 15741752.8
(22) Date of filing: 20.03.2015
(51) Int. Cl.: F28F 27/02, F28D 17/04, F28D 20/00, F28D 20/02

(54) **THERMAL ENERGY STORAGE DEVICE**
SPEICHERVORRICHTUNG FÜR WÄRMEENERGIE
DISPOSITIF D'ACCUMULATION D'ÉNERGIE THERMIQUE

(43) Date of publication of application: 29.11.2017
(73) Proprietor: Siemens Gamesa Renewable Energy A/S, 7330 Brande (DK)
(72) Inventor: BARMEIER, Till Andreas, 20259 Hamburg (DE); GERHARD, Maike, 22145 Hamburg (DE); SEIDEL, Volker, 08014 Barcelona (DE)
(74) Representative: Aspacher, Karl-Georg
(86) International application number: PCT/EP2015/055894
(87) International publication number: WO 2016/150456

(56) References cited:
- WO-A1-2005/075928
- WO-A1-2014/115545
- DE-A1-102005 031 068
- DE-A1-102010 055 997
- US-A1- 2008 066 736
- US-A1- 2010 287 933

## Description

### Field of invention

The present invention relates to a method for operating a device for storing thermal energy.

### Art Background

Thermal energy storages play an important role to the improvement of the stability of power supply networks and for increasing the energy efficiency.

The production of electric power from various types of renewable energy sources such as for instance wind turbines or solar power plants is not continuous. The electric power production depends on environmental conditions such as wind speed. Hence there may be a time gap between times when the production of energy is high, but the energy demand is low and times when the production of energy is low, but the energy demand is high.

One known approach to solve this problem is to temporarily store energy using a thermal energy storage device. Such thermal energy storage devices comprise a container having at least an inlet and an opposite outlet and which is filled with a storage material having the ability to receive thermal energy by being heated up and to release the stored thermal energy at a later time. Usually, the material is heated up (charged) by a working flow from a hot reservoir which has a temperature higher than the material and which crosses the storage device from the inlet to the outlet. At a later time, the stored thermal energy is recovered by the same or by another working flow from a cold reservoir which has a temperature lower than the material and which crosses the storage device backwards from the outlet to the inlet.

The hot reservoir may be an outlet of a heater or any other source of relatively hot heat transfer medium from which the thermal energy is received during the first operational mode.

The cold reservoir may be an outlet of a heat recovery steam generator or any other source of relatively cold heat transfer medium to which the stored thermal energy is released during the second operational mode. The cold reservoir may also be the environment at ambient temperature.

During the charging or the discharging period it is highly possible that temperature gradients are built up in the storage device because of natural convection. Result of the temperature gradients is the non-uniform charging/discharging process of the thermal storage, leading to exergy losses. In particular:
- during charging it may happen that fluid with higher temperature than the cold reservoir leaves the system towards the cold reservoir, when the non-uniform temperature profile is moved to the outlet of the storage, and
- during discharging it may happen that exergy is lost when fluid with lower temperature than the high reservoir leaves the system, towards the hot reservoir.

Losses lead to a reduction of the cycle duration in every cycle and hence to a lower capacity and efficiency of the overall process. The above described losses occur when the thermal energy storage device is mounted horizontally, i.e. perpendicular to the natural convection forces, which act along the vertical direction.

One known solution is the use of vertical storage devices. In this case the natural convection plays no considerable role, since the temperature front in the storage device is in this case perfectly horizontal, i.e. perpendicular to the natural convection forces, and therefore it remains horizontal during the charging or the discharging period. This solution is for example used in thermal energy storing for furnace preheating in industrial processes. The main disadvantage in the use of vertical storage devices are the high construction costs due to the height (small footprint compared to the height) and the complexity of the piping required.

In case of horizontal storage devices, for avoiding changes in the shape of the temperature front, due to natural convection, different solutions are known. For example, it may be possible to use horizontal plates limiting the vertical flow of the fluid, and therefore limiting the natural convection.

Method for storing and releasing thermal energy in the storage devices of the above described types are known from US 2008/066736 A1, WO 2014/115545 A1 and US 2010/287933 A1.

There may be a need for improving the known methods for operating a thermal energy storage device in particular with respect to the reduction of exergy losses.

### Summary of the Invention

This need may be met by the subject matter according to the independent claims.

A thermal energy storage device comprises:
- a container including a heat storage material and defining a main fluid pathway along a longitudinal direction extending between a first longitudinal end and a second longitudinal end of the container,
- an inlet connected to the first longitudinal end and including a plurality of inlet channels distributed along a direction orthogonal to the longitudinal direction,
- an outlet connected to the second longitudinal end and including a plurality of outlet channels distributed along a direction orthogonal to the longitudinal direction,
wherein each of the inlet and outlet channels has a respective actively controlled valve.

When the thermal energy storage device described above is mounted horizontally, the present invention allows inserting the major part of the fluid during the charge and discharge modes at different vertical positions. In particular, both at the inlet and at the outlet of the storage device, the fluid may be inserted in a top or in a bottom position. More in particular, the valves are operated in such a way that the major part of the hot fluid is routed to the bottom during charging and the cold fluid to the top during discharging. Subject to natural convection forces, the hot fluid flows also towards the top of the storage device during charging and the cold fluid flows towards the bottom of the storage device during discharging. Each active controlled valve may be operated between the full opening position and fully close position in order to control the mass flow rate of the fluid through them, in order to run the storage device at optimum conditions, with an optimized shape and position of the temperature front both during charging and discharging.

The actively controlled valves comprise a respective valve member rotatable around a valve axis. The valve member may have different shapes, for example a rectangular shape, to adapt to a channel having a rectangular cross section or a circular shape, to adapt to a channel having a circular cross section.

The valve axis may be horizontally or vertically oriented or may be oriented in any angle between zero and 90 degrees with respect to the vertical axis.

The valve axis may be adjacent to a wall of the respective channel. Advantageously, when the respective valve is completely open, this maximizes the cross-passage area through the valve, thus minimizing the pressure drop through the valve.

The valve axis may be in a central position with respect to the cross section of the respective channel. Advantageously, this minimizes the power required for operating the valve. If operating conditions so required, the valve axis may be in a position intermediate between the wall and said central position of the cross section of the respective channel.

The valve member is made of perforated material. This may allow a minimum flow, even when the respective valve is completely closed. The plurality of inlet channels branches off from a common inlet duct. The plurality of outlet channels is joined together into a common outlet duct.

According to a first aspect of the present invention, a method for storing thermal energy within the thermal energy storage device above described, when the longitudinal direction is horizontally oriented, comprises the steps of:
- opening the plurality of inlet and outlet channels closer to a bottom of the container,
- closing at least one inlet channel closer to a top of the container,
- charging the thermal energy storage device by letting a hot working fluid flow from the inlet to the outlet,
- closing at least one outlet channel closer to a top of the container, before or after said charging step.
The above method allows charging of the thermal energy storage device above described

In a first embodiment of the method for storing thermal energy, the method comprises the step of opening a plurality of inlet and outlet channels closer to a bottom of the container and the step of closing a plurality of inlet and outlet channels closer to a top of the container. Afterwards the thermal energy storage device is charged by letting a hot working fluid flow from the inlet to the outlet. In a second embodiment of the method for storing thermal energy, the valves at the outlet are open during the charging process. At the end of the charging process, due to natural convection, a portion of the storage close to the top and the outlet is warmer than a portion of the storage close to the bottom and the outlet. When this has happened, the upper portion of the plurality of outlet valves are closed, such that no warm working fluid leaves the storage device.

According to a second aspect of the present invention, a method for releasing thermal energy from the thermal energy storage device above describe, when the longitudinal direction is horizontally oriented, comprises the steps of:
- opening a plurality of inlet and outlet channels closer to a top of the container,
- closing at least one outlet channels closer to a bottom of the container,
- discharging the thermal energy storage device by letting a cold working fluid flow from the outlet to the inlet,
- closing at least one inlet channels closer to a bottom of the container.
The above method allows discharging of the thermal energy storage device above described.

In a first embodiment of the method for releasing thermal energy, the method comprises the step of opening a plurality of inlet and outlet channels closer to a top of the container and the step of closing a plurality of inlet and outlet channels closer to a bottom of the container. Afterwards the thermal energy storage device is discharged by letting a cold working fluid flow from the outlet to the inlet. In a second embodiment of the method for releasing thermal energy, the valves at the inlet are open during the discharging process. At the end of discharging, the lower portions of the plurality of inlet valves are closed, in order to isolate the lower left part of the storage device from the hot reservoir, as due to natural convection the lower left part of the storage device is colder.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Fig. 1: shows a schematic section view of a thermal energy storage device during one operating condition according to the present invention,
- Fig. 2: shows a schematic section view of the thermal energy storage device of figure 1, during another operating condition according to the present invention,
- Figs. 3 and 4: show two schematic views of a component of the thermal energy storage device of figures 1 and 2, in two respective operating conditions according to the present invention,
- Figs. 5 and 6: show two schematic views of an alternative embodiment of the component of figures 3 and 4, in two respective operating conditions according to the present invention,
- Figs. 7 and 8: show two schematic views of another alternative embodiment of the component of figures 3 and 4, in two respective operating conditions according to the present invention,
- Figs. 9 and 10: show two schematic views of a further alternative embodiment of the component of figures 3 and 4, in two respective operating conditions according to the present invention.

### Detailed Description

The illustration in the drawing is schematically. It is noted that in different figures, similar or identical elements or features are provided with the same reference signs. In order to avoid unnecessary repetitions elements or features which have already been elucidated with respect to a previously described embodiment are not elucidated again at a later position of the description.

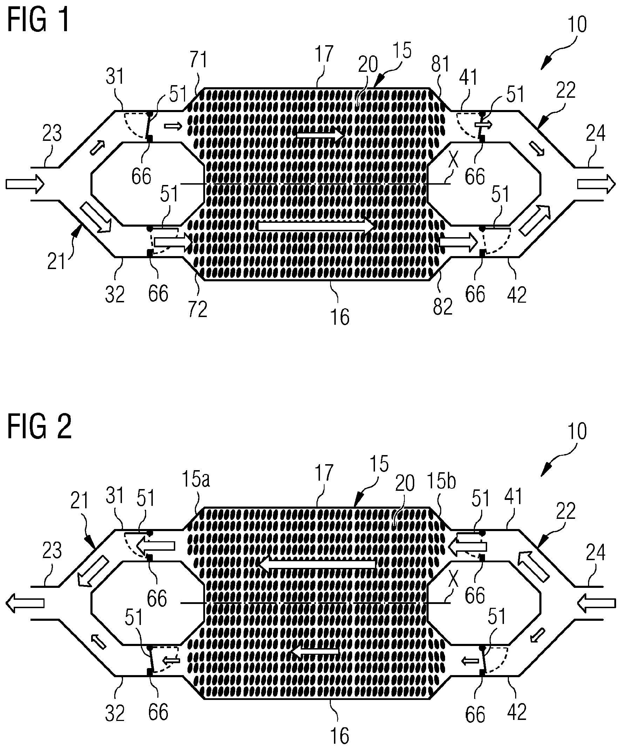

Figures 1 and 2 schematically show a thermal energy storage device 10, where a working fluid, in particular hot air, is circulated between an inlet 21 and an outlet 22, for storing or recovering thermal energy. The inlet 21 is connected to a hot reservoir for receiving or delivering the working fluid at a high temperature T1. The outlet 22 is connected to a cold reservoir for receiving or delivering the working fluid at a low temperature T2, lower than temperature T1. According to other possible embodiments, the working fluid may be a different gaseous or liquid medium.

The thermal energy storage device 10 is typically, but not exclusively, included in a charging circuit (not shown) of a thermal energy storage plant, which may include, according to possible embodiment, in a closed loop:
- the thermal energy storage device 10,
- a fluid transporting machine, for example a fan or blower, for generating a flow of the working fluid the thermal energy storage device 10 from an inlet 21 to an outlet 22,
- a heating device electrically powered for transferring heat to the working fluid. The heating device may be a resistant or inductive heater or a heat pump fed by the electrical power generated by a renewable energy source, for example the wind speed generating power by means of a wind turbine or solar radiation generating power by means of photovoltaic cells, or from the electricity grid. The charging circuit is used to store thermal energy of the hot working fluid coming from the heating device within the thermal energy storage device 10. In other words, the charging circuit is used to charge the thermal energy storage device 10. In this application, the outlet of the heating device constitutes the hot reservoir.

The thermal energy storage device 10 is typically, but not exclusively, also included also in a discharging circuit (not shown) of the thermal energy storage plant, which may include, according to possible embodiment, in a closed loop:
- the thermal energy storage device 10,
- a heat exchanging device, for example a steam generator, included in a thermal cycle for transforming the thermal energy from the working fluid into mechanical power and then into electrical power.
- a second fluid transporting machine for generating a flow of the working fluid in the thermal energy storage device 10 from the outlet 22 to the inlet 21.

The working fluid of the discharging circuit flows therefore in opposite direction with respect to the flow of the working fluid in the charging circuit and is used to recover the thermal energy from the thermal energy storage device 10 and to send it to heat exchanging device. In other words, the discharging circuit is used to discharge the thermal energy storage device 10. In this application, the outlet of the heat exchanging device constitutes the cold reservoir.

The thermal cycle may be a cycle including a thermal machine and the steam generator for transferring thermal energy from the second working fluid to a mass of water in order to generate steam to be fed to the thermal machine.

More in general, the thermal energy storage device 10, may be included in any plant, between a hot reservoir and a cold reservoir, with it is required to store thermal energy, in particular to be subsequently released.

The thermal energy storage device 10 comprises a container 15 including a heat storage material 20. The heat storage material 20 comprises a plurality of heat storing elements having high thermal capacity, for example solid or bulk materials like stones, bricks, ceramics and other solid materials, which have the ability to be heated up and to keep their temperature over a long period of time in order to store the thermal energy which has been transferred to them.

The container 15 extends along a longitudinal direction X between a first longitudinal end 15a and a second longitudinal end 15b of the container 15. In a cross sectional view, orthogonal to the longitudinal direction X, the container 15 may have any shape, for example rectangular or cylindrical.

The container defines a main fluid pathway for the working fluid oriented along the longitudinal direction X. The main fluid pathway is oriented from the inlet 21 to the outlet 22 during the charging of the thermal energy storage device 10 and from the outlet 22 to the inlet 21 during the discharging of the thermal energy storage device 10.

In the embodiment of the attached figures 1 and 2, the container 15 is mounted horizontally, in such a way that a bottom 16 and a top 17 of the container 15 are defined with respect to a vertical direction.

The inlet 21 comprises a common inlet duct 23 for connecting the thermal energy storage device 10 to the hot reservoir and a plurality of inlet channels 31, 32 (two channels in the embodiment of the attached figures 1 and 2) branching off from the common inlet duct 23. The inlet channels 31, 32 are distributed along a direction orthogonal to the longitudinal direction X. In the embodiment of the attached figures 1 and 2 the two inlet channels 31, 32 are distributed along the vertical direction. The top inlet channel 31 is positioned, in operation, between the top 17 of the container 15 and the longitudinal direction axis X. The bottom inlet channel 32 is positioned, in operation, between the bottom 16 and the longitudinal direction axis X. The inlet channels 31, 32 are connected to the first longitudinal end 15a of the container 15 by respective diffusers 71, 72.

The outlet 22 comprises a common outlet duct 24 for connecting the thermal energy storage device 10 to the cold reservoir and a plurality of outlet channels 41, 42 (two channels in the embodiment of the attached figures 1 and 2) joining together into the common outlet duct 24.

The outlet channels 41, 42 are distributed along a direction orthogonal to the longitudinal direction X. In the embodiment of the attached figures 1 and 2 the two outlet channels 41, 42 are distributed along the vertical direction. The top outlet channel 41 is positioned, in operation, between the top 17 if the container 15 and the longitudinal direction axis X. The bottom outlet channels 42 is positioned, in operation, between the bottom 16 and the longitudinal direction axis X. The outlet channels 41, 42 are connected to the second longitudinal end 15b of the container 15 by respective diffuser 81, 82.

According to other embodiments of the present invention, different numbers of inlet and outlet channels may be used, for example a number of inlet channels different from the number of outlet channels. In all cases, the pluralities of inlet and outlet channels are distributed along a direction orthogonal to the longitudinal axis X, in such a way that a first portion of the inlet (outlet) channels are closer to the bottom 16 of the container 15 and a second portion of the inlet (outlet) channels are closer to the top 17 of the container 15.

Each of the inlet and outlet channels 31, 32, 41, 42 has a respective actively controlled valve 51, 52, 53, 54. In the inlet channels 31, 32, each valve 51, 52, 53, 54 is positioned between the inlet duct 23 and the respective diffuser 71, 72. In the outlet channels 41, 42, each valve 51, 52, 53, 54 is positioned between the respective diffuser 81, 82 and the outlet duct 24.

According to the different embodiments of the present invention, valves 51, 52, 53, 54 may be of different type and, in particular, each of them may be different from the others. In all embodiments, each valve 51, 52, 53, 54 comprises a respective valve member 61, 62 which is movable between a fully open position and a fully closed position. The valve member 61, 62 may be made of solid or perforated material.

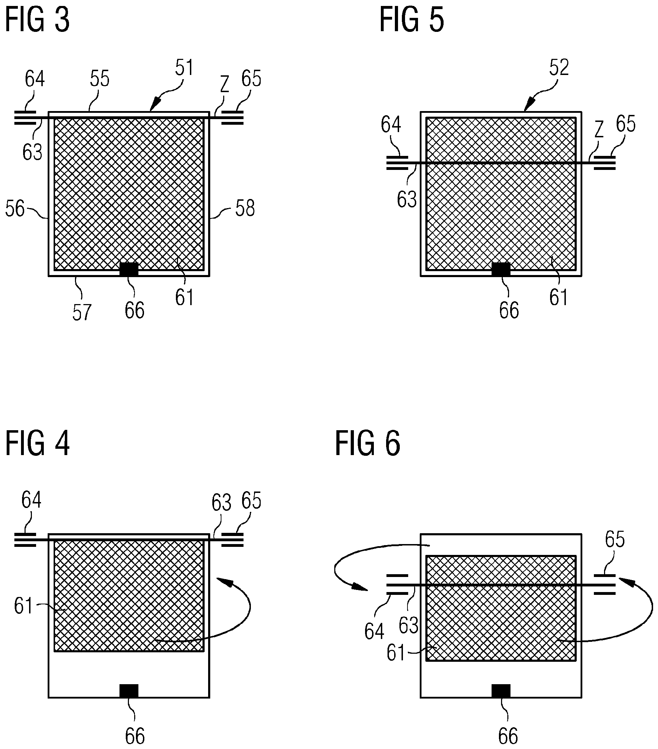

With reference to the embodiments of figures 3 to 10, which represent respective cross sections of any of the inlet and outlet channels 31, 32, 41, 42 taken according to a section plane orthogonal to the longitudinal axis X, the valve member 61, 62 is rotatable around a valve rotation axis Y, Z. The rotation of the valve member 61, 62 around the respective rotation axis Y, Z is made possible by means of a respective shaft 63, fixed to the valve member 61, 62 and coupled to a pair of rotation bearings 64, 65, at two respective opposite axial ends of the shaft 63. The coupling between the shaft 63 and rotation bearings 64, 65 constitutes an hinge for the rotation of the valve member 61, 62 around its rotation axis Y, Z.

According to other embodiments (not shown), the valve member is translatable.

With reference to the embodiments of figures 3 to 6, each of the actively controlled valves 51, 52 has a respective valve member 61 with a rectangular shape, to adapt itself to an inlet or outlet channel 31, 32, 41, 42 having a rectangular cross section delimited by an upper wall 55, a lower wall 57 and two lateral walls 56, 58. The rectangular valve member 61 is hinged at a rotation axis Z oriented parallel to the upper wall 55 and lower walls 57, i.e. the rotation axis Z is horizontally oriented.

In the embodiment of figures 3 and 4, the rotation axis Z is adjacent to the upper wall 55. According to another embodiment (not shown) the rotation axis Z is in a central position, intermediate between the upper and lower walls 55. In the embodiment of figures 5 and 6, the rotation axis Z is in a position intermediate between the upper wall 55 and the central position.

The rectangular valve member 61 rotates between a completely closed position (figures 3 and 5), when it is orthogonal to the pathway defined by the respective inlet or outlet channels 31, 32, 41, 42, and a completely open position (not shown), when it is parallel to the pathway defined by the respective inlet or outlet channels 31, 32, 41, 42. Each valve 51, 52 may be actively operated for reaching any intermediate position (figures 4 and 6) between the completely closed and the completely opened position. A stop 66 is provided at the lower wall 57, for blocking the rectangular valve member 61 at its completely closed position. In the embodiment of figures 1 and 2, the stop 66 is positioned in such a way that during charging, with the pathway of the working fluid oriented from the inlet 21 to the outlet 22 (figure 1), the working fluid pushes the valve member 61 in the top inlet and outlet channels 31, 41 against the respective stop 66, thus acting to keep the respective valves 51, 52 closed. In the bottom inlet and outlet channels 32, 42, the stop is instead positioned in such a way that the working fluid pushes the valve member 61 against the respective stop 66, thus acting to keep the respective valves 51, 52 closed, during discharging, i.e. with the pathway of the working fluid oriented from the outlet 22 to the inlet 21 (figure 2).

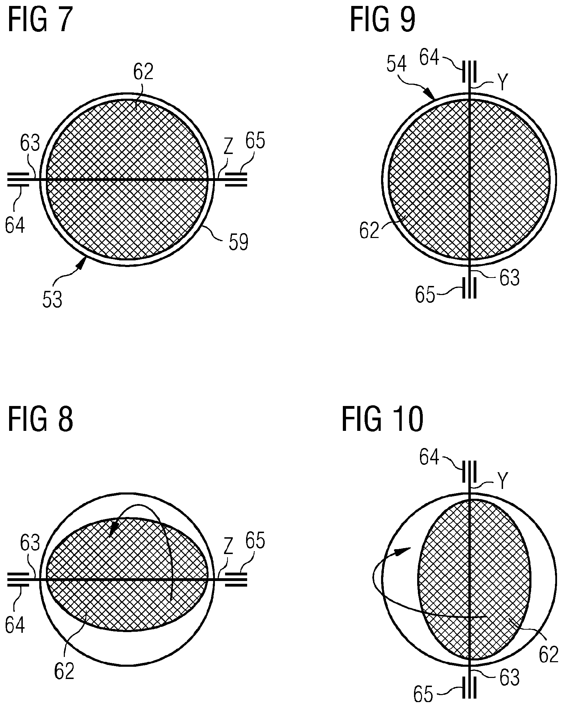

According to other possible embodiments of the present invention (not shown), the rectangular valve member 61 is hinged at a rotation axis Y oriented parallel to the lateral walls 56, 58, i.e. the rotation axis Y is vertically oriented. With reference to the embodiments of figures 7 to 10, each of the actively controlled valves 53, 54 has a respective valve member 62 with a circular shape, to adapt itself to an inlet or outlet channel 31, 32, 41, 42 having a circular cross section delimited by cylindrical wall 59. The circular valve member 62 is hinged at a rotation axis Y, Z oriented along a diameter of the circular cross section of the respective inlet or outlet channel 31, 32, 41, 42. In the embodiment of figures 7 and 8, the circular valve member 62 is hinged at a horizontal rotation axis Z. In the embodiment of figures 9 and 10, the circular valve member 62 is hinged at a vertical rotation axis Y.

The circular valve member 62 rotates between a completely closed position (figures 7 and 9), when it is orthogonal to the pathway defined by the respective inlet or outlet channels 31, 32, 41, 42, and a completely open position (not shown), when it is parallel to the pathway defined by the respective inlet or outlet channels 31, 32, 41, 42. Each valve 53, 54 may be actively operated for reaching any intermediate position (figures 8 and 10) between the completely closed and the completely opened position.

With reference to figures 1 and 2, the thermal energy storage device 10 is horizontally installed, i.e. with the longitudinal direction X is horizontally oriented. A method for storing thermal energy within the thermal energy storage device 10, when it is installed in such a position comprises the steps of:
- opening, partially or completely, the bottom inlet and outlet channels 32, 42, by opening, partially or completely, the respective valves 51, 52, 53, 54,
- closing the top inlet and outlet channels 31, 41, by closing the respective valves 51, 52, 53, 54.

As an alternative embodiment, the top inlet and outlet channels 31, 41 may be partially open to let a minor flow rate of working fluid through them, with reference to the major flow rate of working fluid crossing the bottom inlet and outlet channels 32, 42, from the inlet 21 to the outlet 22. As a further alternative embodiment, the top inlet and outlet channels 31, 41 may be completely closed, but being the respective valve member 61, 62 perforated, a minor flow rate of working fluid may be in any case subject to pass through them.

As a further alternative, the method for storing thermal energy within the thermal energy storage device 10, when it is horizontally installed comprises the steps of:
- opening, partially or completely, the bottom inlet and outlet channels 32, 42, by opening, partially or completely, the respective valves 51, 52, 53, 54,
- closing the top inlet channel 31, by closing the respective valves 51, 52, 53, 54,
- charging the thermal energy storage device 10 by letting a hot working fluid flow from the inlet 21 to the outlet 22,
- after charging, or during charging, closing the top outlet channel 41, by closing the respective valves 51, 52, 53, 54.

More in general, the valves 51, 52, 53, 54 at inlet and outlet channels 31, 32, 41, 42 are operated in such a way that during charging the major part of the hot fluid from the hot reservoir is routed to the bottom. Subject to natural convection forces, the hot fluid will also flow towards the top of the storage device 10, thus assuring a more uniform, with respect to the prior art, temperature profile inside the thermal energy storage device.

A method for releasing thermal energy from the thermal energy storage device 10, when it is installed in the horizontal position comprises the steps of:
- opening, partially or completely, the top inlet and outlet channels 31, 41, by opening, partially or completely, the respective valves 51, 52, 53, 54,
- closing the bottom inlet and outlet channels 32, 42, by closing the respective valves 51, 52, 53, 54.

Like during charging, also during discharging it is possible that the bottom inlet and outlet channels 32, 42 may be partially open to let a minor flow rate of working fluid through them, with reference to the major flow rate of working fluid crossing the top inlet and outlet channels 31, 41, from the outlet 22 to the inlet 21. As a further alternative embodiment, the bottom inlet and outlet channels 32, 42 may be completely closed, but being the respective valve member 61, 62 perforated, a minor flow rate of working fluid may be in any case subject to pass through them.

As a further alternative, the method for releasing thermal energy from the thermal energy storage device 10, when it is horizontally installed comprises the steps of:
- opening, partially or completely, the top inlet and outlet channels 31, 41, by opening, partially or completely, the respective valves 51, 52, 53, 54,
- closing the bottom outlet channel 42, by closing the respective valves 51, 52, 53, 54,
- discharging the thermal energy storage device 10 by letting a cold working fluid flow from the outlet 22 to the inlet 21,
- after discharging, or during discharging, closing the bottom inlet channels 32, by closing the respective valves 51, 52, 53, 54.

More in general, the valves 51, 52, 53, 54 at inlet and outlet channels 31, 32, 41, 42 are operated in such a way that during discharging the major part of the cold fluid from the cold reservoir is routed to the top. Subject to natural convection forces, the cold fluid will also flow towards the bottom of the storage device 10, thus assuring a more uniform and efficient discharging of the thermal energy storage device.

## Claims

1. A method for storing thermal energy within a thermal energy storage device (10) comprising:
- a container (15) including a heat storage material (20) and defining a main fluid pathway along a longitudinal direction (X) extending between a first longitudinal end (15a) and a second longitudinal end (15b) of the container (15),
- an inlet (21) connected to the first longitudinal end (15a) and including a plurality of inlet channels (31, 32) distributed along a direction orthogonal to the longitudinal direction (X),
- an outlet (22) connected to the second longitudinal end (15b) and including a plurality of outlet channels (41, 42) distributed along a direction orthogonal to the longitudinal direction (X),
wherein each of the inlet and outlet channels (31, 32, 41, 42) has a respective actively controlled valve (51, 52, 53, 54),
the longitudinal direction (X) being horizontally oriented, **characterized in that** the method comprises the steps of:
- opening the plurality of inlet and outlet channels (32, 42) closer to a bottom (16) of the container (15),
- closing at least one inlet channel (31) closer to a top (17) of the container (15),
- charging the thermal energy storage device (10) by letting a hot working fluid flow from the inlet (21) to the outlet (22),
- closing at least one outlet channel (41) closer to a top (17) of the container (15), before or after said charging step.

2. A method for releasing thermal energy from the thermal energy storage device (10) comprising:
- a container (15) including a heat storage material (20) and defining a main fluid pathway along a longitudinal direction (X) extending between a first longitudinal end (15a) and a second longitudinal end (15b) of the container (15),
- an inlet (21) connected to the first longitudinal end (15a) and including a plurality of inlet channels (31, 32) distributed along a direction orthogonal to the longitudinal direction (X),
- an outlet (22) connected to the second longitudinal end (15b) and including a plurality of outlet channels (41, 42) distributed along a direction orthogonal to the longitudinal direction (X),
wherein each of the inlet and outlet channels (31, 32, 41, 42) has a respective actively controlled valve (51, 52, 53, 54),
the longitudinal direction (X) being horizontally oriented, **characterized in that** the method comprises the steps of:
- opening a plurality of inlet and outlet channels (31, 41) closer to a top (17) of the container (15),
- closing at least one outlet channel (42) closer to a bottom (16) of the container (15),
- discharging the thermal energy storage device (10) by letting a cold working fluid flow from the outlet (22) to the inlet (21),
- closing at least one inlet channels (32) closer to a bottom (16) of the container (15).

## Patentansprüche

1. Verfahren zum Speichern von Wärmeenergie in einer Wärmeenergiespeichervorrichtung (10), die Folgendes umfasst:
- einen Behälter (15) mit einem Wärmespeichermaterial (20), der einen Fluidhauptweg in einer Längsrichtung (X) definiert, die zwischen einem ersten Ende (15a) und einem zweiten Ende (15b) in Längsrichtung des Behälters (15) verläuft,
- einen Einlass (21), der mit dem ersten Ende (15a) in Längsrichtung verbunden ist und mehrere Einlasskanäle (31, 32) aufweist, die in einer orthogonal zur Längsrichtung (X) verlaufenden Richtung verteilt sind,
- einen Auslass (22), der mit dem zweiten Ende (15b) in Längsrichtung verbunden ist und mehrere Auslasskanäle (41, 42) aufweist, die in einer orthogonal zur Längsrichtung (X) verlaufenden Richtung verteilt sind,
wobei jeder der Ein- und der Auslasskanäle (31, 32, 41, 42) jeweils ein aktiv geregeltes Ventil (51, 52, 53, 54) aufweist, wobei die Längsrichtung (X) horizontal ausgerichtet ist,
**dadurch gekennzeichnet, dass** das Verfahren folgende Schritte umfasst:
- Öffnen der mehreren näher an einem Boden (16) des Behälters (15) liegenden Ein- und Auslasskanäle (32, 42),
- Schließen mindestens eines näher an einer Oberseite (17) des Behälters (15) liegenden Einlasskanals (31),
- Laden der Wärmeenergiespeichervorrichtung (10) durch Durchströmenlassen eines heißen Arbeitsfluids von dem Einlass (21) zum Auslass (22),
- Schließen mindestens eines näher an einer Oberseite (17) des Behälters (15) liegenden Auslasskanals (41) vor oder nach dem Laden.

2. Verfahren zum Abgeben von Wärmeenergie aus der Wärmeenergiespeichervorrichtung (10), die Folgendes umfasst:
- einen Behälter (15) mit einem Wärmespeichermaterial (20), der einen Fluidhauptweg in einer Längsrichtung (X) definiert, die zwischen einem ersten Ende (15a) und einem zweiten Ende (15b) in Längsrichtung des Behälters (15) verläuft,
- einen Einlass (21), der mit dem ersten Ende (15a) in Längsrichtung verbunden ist und mehrere Einlasskanäle (31, 32) aufweist, die in einer orthogonal zur Längsrichtung (X) verlaufenden Richtung verteilt sind,
- einen Auslass (22), der mit dem zweiten Ende (15b) in Längsrichtung verbunden ist und mehrere Auslasskanäle (41, 42) aufweist, die in einer orthogonal zur Längsrichtung (X) verlaufenden Richtung verteilt sind,
wobei jeder der Ein- und der Auslasskanäle (31, 32, 41, 42) jeweils ein aktiv geregeltes Ventil (51, 52, 53, 54) aufweist, wobei die Längsrichtung (X) horizontal gerichtet ist,
**dadurch gekennzeichnet, dass** das Verfahren folgende Schritte umfasst:
- Öffnen von mehreren näher an einer Oberseite (17) des Behälters (15) liegenden Ein- und Auslasskanälen (31, 41),
- Schließen mindestens eines näher an einem Boden (16) des Behälters (15) liegenden Auslasskanals (42),
- Entladen der Wärmeenergiespeichervorrichtung (10) durch Durchströmenlassen eines kalten Arbeitsfluids von dem Einlass (22) zum Auslass (21),
- Schließen mindestens eines näher an einem Boden (16) des Behälters (15) liegenden Einlasskanals (32).

## Revendications

1. Procédé de stockage d'énergie thermique à l'intérieur d'un dispositif de stockage d'énergie thermique (10) comprenant:
- un conteneur (15) comprenant une matière de stockage de chaleur (20) et définissant un parcours principal de fluide sur une direction longitudinale (X) s'étendant entre une première extrémité longitudinale (15a) et une deuxième extrémité longitudinale (15b) du conteneur (15),
- une entrée (21) raccordée à la première extrémité longitudinale (15a) et comprenant une pluralité de canaux d'entrée (31, 32) distribués sur une direction orthogonale par rapport à la direction longitudinale (X),
- une sortie (22) raccordée à la deuxième extrémité longitudinale (15b) et comprenant une pluralité de canaux de sortie (41, 42) distribués sur une direction orthogonale par rapport à la direction longitudinale (X),
dans lequel chacun des canaux d'entrée et de sortie (31, 32, 41, 42) possède une vanne activement contrôlée (51, 52, 53, 54) respective,
la direction longitudinale (X) étant orientée à l'horizontale, **caractérisé en ce que** le procédé comprend les étapes suivantes:
- ouverture de la pluralité de canaux d'entrée et de sortie (32, 42) plus près du fond (16) du conteneur (15),
- fermeture d'au moins un canal d'entrée (31) plus près du sommet (17) du conteneur (15),
- chargement du dispositif de stockage d'énergie thermique (10) en laissant s'écouler un fluide de travail chaud de l'entrée (21) vers la sortie (22),
- fermeture d'au moins un canal de sortie (41) plus près du sommet (17) du conteneur (15), avant ou après ladite étape de chargement.

2. Procédé de libération d'énergie thermique d'un dispositif de stockage d'énergie thermique (10) comprenant:
- un conteneur (15) comprenant une matière de stockage de la chaleur (20) et définissant un parcours principal de fluide sur une direction longitudinale (X) s'étendant entre une première extrémité longitudinale (15a) et une deuxième extrémité longitudinale (15b) du conteneur (15),
- une entrée (21) raccordée à la première extrémité longitudinale (15a) et comprenant une pluralité de canaux d'entrée (31, 32) distribués sur une direction orthogonale par rapport à la direction longitudinale (X),
- une sortie (22) raccordée à la deuxième extrémité longitudinale (15b) et comprenant une pluralité de canaux de sortie (41, 42) distribués sur une direction orthogonale par rapport à la direction longitudinale (X),
dans lequel chacun des canaux d'entrée et de sortie (31, 32, 41, 42) possède une vanne activement contrôlée (51, 52, 53, 54) respective,
la direction longitudinale (X) étant orientée à l'horizontale, **caractérisé en ce que** le procédé comprend les étapes suivantes:
- ouverture d'une pluralité de canaux d'entrée et de sortie (31, 41) plus près du sommet (17) du conteneur (15),
- fermeture d'au moins un canal de sortie (42) plus près du fond (16) du conteneur (15),
- déchargement du dispositif de stockage d'énergie thermique (10) en laissant s'écouler un fluide de travail froid de la sortie (22) vers l'entrée (21),
- fermeture d'au moins un canal d'entrée (32) plus près du fond (16) du conteneur (15).
